# EUROPEAN PATENT APPLICATION

(11) **EP 4 628 835 A1**
(43) Date of publication of application: **08.10.2025**
(21) Application number: 25165960.3
(22) Date of filing: 25.03.2025
(51) Int. Cl.: G01B 7/28, F01D 5/14, G01B 15/04

(54) **COATED BLADE EDGE DETECTION USING MICROWAVE IMAGING**

(30) Priority: 05.04.2024 US 202418627555
(71) Applicant: RTX Corporation, Farmington, CT 06032 (US)
(72) Inventor: Gok, Gurkan, Milford, 06461 (US); Kuczek, Andrzej E., Bristol, 06010 (US); Mencagli, Mario Junior, Glastonbury, 06033 (US); Zacchio, Joseph, Wethersfield, 06109 (US)
(74) Representative: Schmitt-Nilson Schraud Waibel Wohlfrom Patentanwälte Partnerschaft mbB

(57) **Abstract**

A substrate edge detection system including a substrate material having the substrate edge with a surface; a coating disposed on the surface of the substrate edge; a probe in operative communication with the coating and the substrate edge; and a controller in operative communication with the probe.

## Description

The present disclosure is directed to the improved process for substrate edge detection. Particularly, the detection of substrate edges located under dielectric coatings.

During the manufacture of components, the substrate material of the component may be coated. The coating material can be a dielectric material, such as a thermal barrier coating material.

After the coating material has been disposed on the substrate material, certain machining processes may be performed, such as edge dressing. Edge dressing can include removing some of the coating material from the edges to form chamfered edges. However, it is desired that the machining process avoids removing the substrate material at the edges. In order to avoid damaging the edges of the substrate material, it is necessary to locate the position of the edge of the substrate relative to the coating material.

Finding the edge of the substrate material is a crucial step in the machining process to locate a workpiece's starting position. Approaches are well known for parts with exposed and accessible substrate surfaces. However, parts with the substrate edges partially or completely hidden (optically opaque) by coating materials with irregular thickness, finding the substrate edge becomes a challenge. The inability to locate the substrate edges can hinder the automation of chamfering coated edges. The current processes for dressing the edges rely on time consuming and demanding manual work.

In accordance with the present disclosure, there is provided a substrate edge detection system comprising a substrate material having the substrate edge with a surface; a coating disposed on the surface of the substrate edge; a probe in operative communication with the coating and the substrate edge; and a controller in operative communication with the probe.

Particular embodiments further may include at least one, or a plurality of, the following optional features, alone or in combination with each other:

A further embodiment of any of the foregoing embodiments may additionally and/or alternatively include the probe comprises a near-field edge detection probe.

A further embodiment of any of the foregoing embodiments may additionally and/or alternatively include the probe is configured to emit scanning signals that can pass through the coating and be reflected by the substrate material.

A further embodiment of any of the foregoing embodiments may additionally and/or alternatively include the probe is configured to emit radio frequency (RF) scanning signals and detect radio frequency (RF) scanning signals.

A further embodiment of any of the foregoing embodiments may additionally and/or alternatively include the probe is configured to emit microwave frequency scanning signals and detect microwave frequency scanning signals.

A further embodiment of any of the foregoing embodiments may additionally and/or alternatively include the substrate edge detection system further comprising a dressing machine configured to remove a portion of the coating; wherein the probe is in operative communication with the dressing machine.

A further embodiment of any of the foregoing embodiments may additionally and/or alternatively include the controller comprises at least one of hardware, firmware, and software components that are configured to perform functions of the substrate edge detection system.

In accordance with the present disclosure, there is provided a workpiece substrate edge detection system comprising a workpiece substrate material having the substrate edge with a surface; a coating disposed on the surface of the substrate edge; a probe in operative communication with the coating and the substrate edge; and a controller in operative communication with the probe.

Particular embodiments further may include at least one, or a plurality of, the following optional features, alone or in combination with each other:

A further embodiment of any of the foregoing embodiments may additionally and/or alternatively include the probe comprises an emitter/detector.

A further embodiment of any of the foregoing embodiments may additionally and/or alternatively include the workpiece comprises one of a vane or a blade for a gas turbine engine.

A further embodiment of any of the foregoing embodiments may additionally and/or alternatively include the probe comprises a near-field edge detection probe.

A further embodiment of any of the foregoing embodiments may additionally and/or alternatively include the probe is configured to emit scanning signals that can pass through the coating and be reflected by the substrate material.

A further embodiment of any of the foregoing embodiments may additionally and/or alternatively include the probe is configured to emit microwave frequency scanning signals.

In accordance with the present disclosure, there is provided a process for substrate edge detection comprising providing a substrate material having the substrate edge with a surface; providing a coating disposed on the surface of the substrate edge; placing a probe in operative communication with the coating and the substrate edge; locating a controller in operative communication with the probe; and measuring a coating thickness of the coating material deposited on the surface employing reflectometry.

Particular embodiments further may include at least one, or a plurality of, the following optional features, alone or in combination with each other:

A further embodiment of any of the foregoing embodiments may additionally and/or alternatively include the process further comprising raster scanning the probe over a coating surface; emitting a scanning signal; determining a profile along a dimension tangent to the coating surface the shape of the substrate material behind the coating; and sensing a change in a reflected signal emitted from the probe.

A further embodiment of any of the foregoing embodiments may additionally and/or alternatively include the process further comprising sensing a phase amplitude of a scanning signal reflection.

A further embodiment of any of the foregoing embodiments may additionally and/or alternatively include the process further comprising combining a depth dimension and profile dimension to localize the edge of the substrate material in three dimensions.

A further embodiment of any of the foregoing embodiments may additionally and/or alternatively include the process further comprising coupling a dressing machine in operative communication with the probe; wherein the probe and dressing machine are in operative communication with the controller.

A further embodiment of any of the foregoing embodiments may additionally and/or alternatively include the process further comprising adaptive machining the coating surface; and employing a closed loop control configured to adjust a toolpath of the dressing machine follow a position of the substrate edge.

A further embodiment of any of the foregoing embodiments may additionally and/or alternatively include the process further comprising directing, via the controller, the dressing machine to provide a predetermined finish along the substrate edge in the absence of damaging the substrate edge.

Other details of the process for substrate edge detection are set forth in the following detailed description and the accompanying drawings wherein like reference numerals depict like elements.
Fig. 1 is a schematic representation of an exemplary substrate edge detection system.
Fig. 2 is a schematic representation of an exemplary substrate edge detection system.
Fig. 3 is a schematic representation of a graph demonstrating the magnitude of a measured reflection coefficient.
Fig. 4 is a schematic representation of a graph demonstrating the phase of the measured reflection coefficient of Fig. 3.
Fig. 5 is a schematic representation of a graph demonstrating a reflection coefficient in time-domain.
Fig. 6 is a schematic representation of a graph of a numerical demonstration of the exemplary technique to identify the x-coordinate of the hidden edge from the phase of the reflection coefficient via raster scanning.

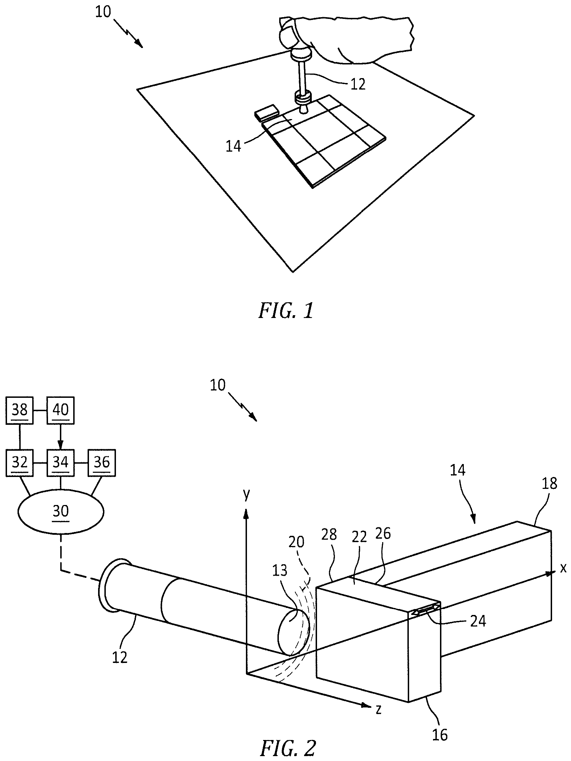

Referring now to Fig. 1, there is illustrated an exemplary substrate edge detection system 10. The substrate edge detection system 10 includes a probe 12. The probe 12 shown is handheld. The probe 12 can include an emitter/detector 13. The probe 12 can be a near-field edge detection probe 12. It is contemplated that the probe 12 can be mounted on automated equipment capable of scanning a subject workpiece 14 having a coating 16 disposed on a substrate material 18. The workpiece 14 can be a vane/blade for a gas turbine engine. The probe 12 can emit scanning signals 20 that can pass through the coating 16 and be reflected by the substrate material 14. For example, the coating 16 can be a dielectric material, such as a thermal barrier coating (TBC) deposited on a surface 22 of the substrate material 18. The coating 16 can have a nominal thickness 24 that extends from the surface 22. The substrate material 18 can include an edge 26 that defines the boundary of the substrate material 18. The edge 26 can be coated with the coating 16. The edge 26 would not be visible to the eye, since the edge 26 is coated with the coating 16.

In an exemplary embodiment, the probe 12 can emit radio frequency (RF) scanning signals 20. In another exemplary embodiment, the probe 12 can emit microwave frequency scanning signals 20. It has been determined that the microwave frequency scanning signals 20 can be employed to detect the substrate material 18 location under the coating 16 with the most effective dimensional detail.

In an exemplary embodiment, the probe 12 can direct the scanning signals 20 to the substrate material 14 proximate the edge 26. Subsequently an RF signal 20 can penetrate the coating material 16 and reflect off the metallic substrate material 18 behind the coating 16.

A process of substrate edge detection can include measuring physical coating thickness 24 (dimension normal to a coating surface 28) of the coating 16 material deposited on the metal surface 22 based on reflectometry. Reflectometry can be understood as measuring reflected scanning signal 20 characteristics such as delay and amplitude. One can profile along a dimension tangent to the coating surface 28 the shape of the substrate material 18 behind the coating 16 by raster scanning the probe 12 over the coating 16 and sensing the change in the reflected signal. That is, sensing the phase amplitude of the scanning signal reflection. The next step is to combine depth dimensions and profile dimensions to localize the edge 26 of the substrate material 18, such as a metal structure behind the TBC coating 16 in three dimensions.

It is contemplated that automated dressing machine 30 can be in operative communication with the probe 12. The probe 12 and dressing machine 30 can be in operative communication with a controller 32. The controller 32 can receive the scanning signal 20 and process the data to determine the location of the substrate edge 26. The controller 32 can direct the dressing machine 30 to provide the predetermined finish along the edge 26 in the absence of damaging the edge 26. The disclosed substrate edge detection system 10 can be used not only for local sensing but also for adaptive machining where a closed loop control is used to adjust the toolpath of the dressing machine 30 accordingly to accurately follow the true position of the substrate edge 26 in a continuous way.

The controller 32 may include hardware, firmware, and/or software components that are configured to perform the functions disclosed herein, including the functions of the substrate edge detection system 10. While not specifically shown, the controller 32 may include other computing devices (e.g., servers, mobile computing devices, etc.) and computer aided manufacturer (CAM) systems which may be in communication with each other and/or the controller 32 via a communication network 34 to perform one or more of the disclosed functions. The controller 32 may include at least one processor 36 (e.g., a controller, microprocessor, microcontroller, digital signal processor, etc.), memory 38, and an input/output (I/O) subsystem 40. The controller 32 may be embodied as any type of computing device e.g., a server, an enterprise computer system, a network of computers, a combination of computers and other electronic devices, or other electronic devices. Although not specifically shown, the I/O subsystem 40 typically includes, for example, an I/O controller, a memory controller, and one or more I/O ports. The processor 36 and the I/O subsystem 40 are communicatively coupled to the memory 38. The memory 38 may be embodied as any type of computer memory device (e.g., volatile memory such as various forms of random access memory).

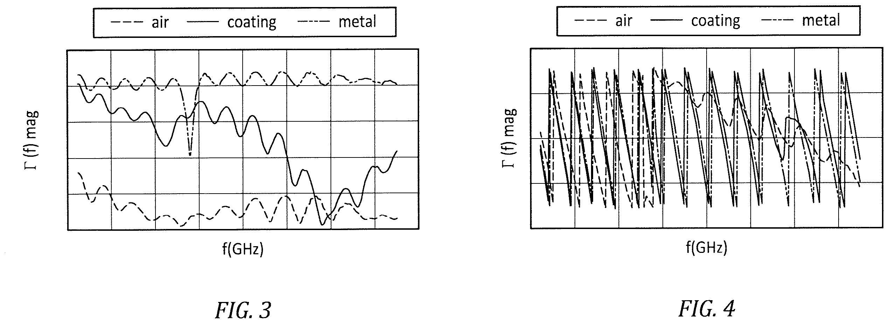

Referring also to Fig. 3 and Fig. 4 illustrating the graphs that are utilized to identify the z-coordinate of the hidden edge 26. The substrate edge detection system 10 can measure the thickness 24 and a dielectric constant of the coating 16. Fig. 3 shows the graph indicating the magnitude of the measurement. Fig. 4 shows the phase of the measured reflection coefficient produced by the scanning signal 20. The air, coating material and substrate material all have separate lines on the graphs.

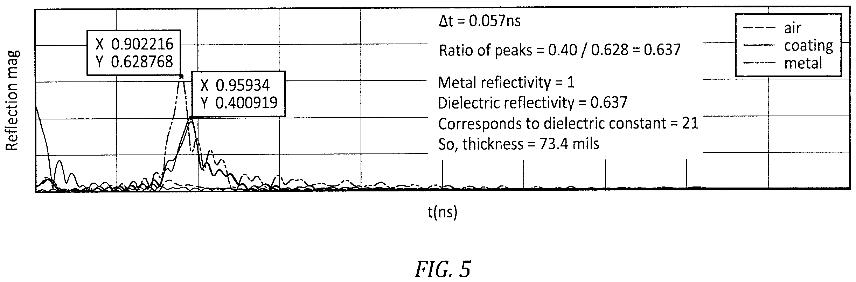

Referring also to Fig. 5, the graph demonstrating a reflection coefficient in time-domain is shown. The inset in Fig. 5 explains the main parameters employed to retrieve the dielectric constant and coating thickness 24.

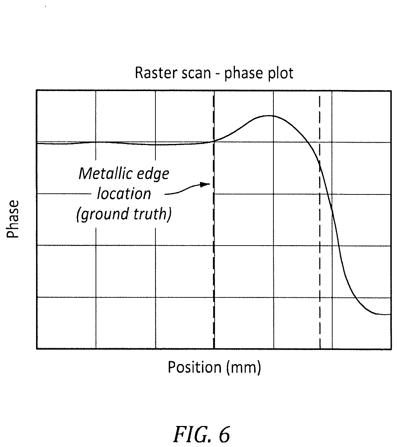

Referring also to Fig. 6, a graph of a numerical demonstration of the exemplary technique to identify the x-coordinate of the hidden edge from the phase of the reflection coefficient via raster scanning is shown. One can derive the location of the edge 26.

The substrate edge detection system 10 can be employed in a first step, in which the reflection coefficient versus frequency at the input port of the probe is measured when the probe 12 touches a portion of the workpiece 14 with coating 16 and without coating (Figs. 3 and 4). The latter is simply a metallic portion of the workpiece 14 and is utilized as reference. Performing the inverse Fourier transform of the two reflection coefficients, one can obtain the time-domain reflection coefficients, which assume a sinc-like profile with a maximum value located at two different time instants (Fig. 5). The difference between these the two time instants represents the time the wave coming from the probe takes to propagate through the coating 16. From the reflectivity at the probe-coating interface, which is given by the ratio of the maximum value of the two reflection coefficients, one can obtain the dielectric constant of the coating. Now, the coating thickness 24 can be simply calculated by relating the speed of light in the coating 16, which depends on its dielectric constant, with the time the wave takes to propagate through the coating 16.

The substrate edge detection system 10 can be employed in a second step, in which, as mentioned above, the x-coordinate of the edge 26 is obtained from the phase of reflection coefficient at fixed frequency by mechanically moving the probe 12 along a line perpendicular to the coating edge 26. In doing so, one can obtain the phase of the reflection coefficient as a function of the position (Fig. 6). When the probe 12 is far from the edge 26, the phase of the reflection coefficient is expected to be constant. On the other hand, when the probe 12 is approaching the edge 26 location, the structure of the workpiece 14 is no longer flat and, as a result, the phase of reflection coefficient starts changing with the position. The first position where the phase of the reflection coefficient deviates from the previously assumed constant value identify the location of the hidden metallic edge 26. Then, it experiences a second variation by decreasing almost linearly with the position that identifies the location of the coating boundary at surface 22.

A technical advantage of the disclosed process for substrate edge detection includes a method that enables edge finding of substrates under dielectric coatings such as TBC.

Another technical advantage of the disclosed process for substrate edge detection includes the automation of an auto dressing process on a wide range of complex and irregular geometries of the substrate and coatings.

Another technical advantage of the disclosed process for substrate edge detection includes a dressing machine configured to remove a portion of the coating, the probe can be operative communication with the dressing machine to provide more accurate machining.

Another technical advantage of the disclosed process for substrate edge detection includes a probe that is configured to emit scanning signals that can pass through the coating and be reflected by the substrate material allowing for better edge identification.

Another technical advantage of the disclosed process for substrate edge detection includes a probe that is configured to emit microwave frequency scanning signals for greater clarity.

There has been provided a process for substrate edge detection. While the process for substrate edge detection has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A substrate edge detection system comprising:
a substrate material having the substrate edge with a surface;
a coating disposed on the surface of the substrate edge;
a probe in operative communication with the coating and the substrate edge; and
a controller in operative communication with the probe.

2. The substrate edge detection system according to claim 1, wherein the probe comprises a near-field edge detection probe.

3. The substrate edge detection system according to claim 1 or 2, wherein the probe is configured to emit scanning signals that can pass through the coating and be reflected by the substrate material.

4. The substrate edge detection system according to any of claims 1 to 3, wherein the probe is configured to emit radio frequency (RF) scanning signals and detect radio frequency (RF) scanning signals.

5. The substrate edge detection system according to any of claims 1 to 4, wherein the probe is configured to emit microwave frequency scanning signals and detect microwave frequency scanning signals.

6. The substrate edge detection system according to any of claims 1 to 5,
further comprising:
a dressing machine configured to remove a portion of the coating; wherein the probe is in operative communication with the dressing machine.

7. The substrate edge detection system according to any of claims 1 to 6, wherein the controller comprises at least one of hardware, firmware, and software components that are configured to perform functions of the substrate edge detection system.

8. The substrate edge detection system according to any of claims 1 to 7, wherein probe comprises an emitter/detector.

9. The substrate edge detection system according to any of claims 1 to 8; wherein the substrate is comprised in a workpiece and the substrate material is a workpiece substrate material; and/or wherein the workpiece comprises one of a vane or a blade for a gas turbine engine.

10. A process for substrate edge detection comprising:
providing a substrate material having the substrate edge with a surface;
providing a coating disposed on the surface of the substrate edge;
placing a probe in operative communication with the coating and the substrate edge;
locating a controller in operative communication with the probe; and
measuring a coating thickness of the coating material deposited on the surface employing reflectometry.

11. The process of claim 10, further comprising:
raster scanning the probe over a coating surface;
emitting a scanning signal;
determining a profile along a dimension tangent to the coating surface the shape of the substrate material behind the coating; and
sensing a change in a reflected signal emitted from the probe.

12. The process of claim 10 or 11,
further comprising:
sensing a phase amplitude of a scanning signal reflection.

13. The process of any of claims 10 to 12,
further comprising:
combining a depth dimension and profile dimension to localize the edge of the substrate material in three dimensions.

14. The process of any of claims 10 to 13,
further comprising:
coupling a dressing machine in operative communication with the probe; wherein the probe and dressing machine are in operative communication with the controller.

15. The process of any of claims 10 to 14,
further comprising:
adaptive machining the coating surface; and
employing a closed loop control configured to adjust a toolpath of the dressing machine follow a position of the substrate edge; and/or
further comprising:
directing, via the controller, the dressing machine to provide a predetermined finish along the substrate edge in the absence of damaging the substrate edge.
